Europäisches Patentamt

European Patent Office

Office européen des brevets

(11) Veröffentlichungsnummer: **0 518 054 A1**

(12) **EUROPÄISCHE PATENTANMELDUNG**

(21) Anmeldenummer: **92107852.3**

(22) Anmeldetag: **09.05.92**

(51) Int. Cl.5: **A23G 1/02**, A23G 1/18, A23G 1/04, A23L 3/015

(30) Priorität: **06.06.91 DE 4118539**

(43) Veröffentlichungstag der Anmeldung:
**16.12.92 Patentblatt 92/51**

(84) Benannte Vertragsstaaten:
**AT BE CH DE FR GB LI NL**

(71) Anmelder: **Gebr. Bindler Maschinenfabrik GmbH & Co. KG**
**Kölner Strasse 102-106**
**W-5275 Bergneustadt/Rhld.1(DE)**

(72) Erfinder: **Bindler, Uwe, Dipl.-Ing.**
**Wilhelmstrasse 47**
**W-5275 Bergneustadt(DE)**
Erfinder: **Hanitzsch, Werner**
**Nistenbergstrasse 3**
**W-5275 Bergneustadt(DE)**

(74) Vertreter: **Cohausz & Florack Patentanwälte**
**Postfach 14 01 61 Schumannstrasse 97**
**W-4000 Düsseldorf 1(DE)**

(54) **Vorrichtung und Verfahren zum thermischen Aufbereiten von pastösen oder flüssigen Nahrungsmittelmassen.**

(57) Die Erfindung betrifft eine Vorrichtung zur thermischen Aufbereitung von pastösen oder flüssigen Nahrungsmittelmassen, insbesondere Schokoladenmassen. Zur Durchführung der Dekontamination von der Nahrungsmittelmasse zugegebenen Rücklaufmassen schlägt die Erfindung folgende Merkmale vor:

- eine im Tandembetrieb arbeitende Doppelkolbenpumpe 3a,3b,4a,4b,
- einen Einlaß E, durch den die Masse in den einen Kolbenraum 3a der Doppelkolbenpumpe einleitbar ist,
- einen Auslaß A, 6, aus dem die behandelte Masse aus dem anderen Kolbenraum 3b ausgebbar ist,
- im Weg zwischen den beiden Kolbenräumen 3a,3b angeordnete Schermittel 5 zur Ausübung von hohen Scherkräften auf die die Schermittel 5 durchströmende Masse und
- eine den Kolbenräumen 3a,3b der Doppelkolbenpumpe zugeordnete Einheit 9 zur thermischen Beaufschlagung der in den Kolbenräumen 3a,3b befindlichen Masse.

Die Erfindung betrifft ein Verfahren und eine Vorrichtung zur thermischen Aufbereitung von pastösen oder flüssigen Nahrungsmittelmassen, insbesondere Schokoladenmassen.

Bei der Aufbereitung von Nahrungsmittelmassen wird häufig Rücklaufmaterial verwendet. Dabei ist es außerordentlich wichtig, daß das Rücklaufmaterial von Kontaminationen befreit wird, die zu einer Unbrauchbarkeit der gesamten aufbereiteten Schokoladenmasse führen können. Solche Kontaminationen sind erfahrungsgemäß dadurch gebildet, daß sich ein Verunreinigungskeim mit einer Schutzhülle umgibt, aus der er häufig nur schwer befreibar ist.

Zur Dekontamination von mit Rücklaufmaterial versetzten Schokladenmassen ist es bekannt, die Masse mit dem Rücklaufmaterial eine Extruderschnecke passieren zu lassen. Bei diesem Prozeß ist jedoch nicht gewährleistet, daß alle Keime aufgebrochen werden, da hierbei die einzelnen Keime nur mit einer bestimmten statistischen Verteilung den Scherkräften der Extruderschnecke unterworfen sind.

Bei einem weiteren bekannten Verfahren zum Sterilisieren wird Kakaomasse zwischen einem Mischbehälter und einem wärmetauscher im Kreislauf umgepumpt (DE 3813615 A1).

Der Erfindung liegt die Aufgabe zugrunde, ein Verfahren und eine Vorrichtung zu schaffen, mittels dem die Nahrungsmittelmassen derart aufbereitbar sind, daß Kontaminationen beseitigt werden.

Diese Aufgabe wird erfindungsgemäß gelöst durch folgende Merkmale:
- eine im Tandembetrieb arbeitende Doppelkolbenpumpe,
- einen Einlaß, durch den die Masse in den einen Kolbenraum der Doppelkolbenpumpe einleitbar ist,
- einen Auslaß aus dem die temperierte Masse aus dem anderen Kolbenraum ausgebbar ist,
- im Weg zwischen den beiden Kolbenräumen angeordnete Schermittel zur Ausübung von hohen Scherkräften auf die die Schermittel durchströmende Masse und
- eine den Kolbenräumen der Doppelkolbenpumpe zugeordnete Einheit zur thermischen Beaufschlagung der in den Kolbenräumen befindlichen Masse.

Die Erfindung zeichnet sich dadurch aus, daß die Doppelkolbenpumpe nicht nur zum Transport der pastösen oder flüssigen Nahrungsmittelmasse dient sondern dadurch, daß die Masse einem zyklischen Hin- und Herpumpvorgang ausgesetzt werden kann, auch zur thermischen Behandlung der Masse eingesetzt wird. Im Laufe des thermischen Behandlungsvorganges durchströmt die Masse dabei bei jedem Umpumpvorgang ein Schermittel, wobei hohe Scherkräfte auf die mikroskopischen Massebestandteile ausgeübt werden.

Durch die Überlagerung von thermischer und mechanischer Behandlung der Masse ergibt sich die gewünschte hochgradige Dekontamination.

Die Dekontamination kann dabei zum einen aufgrund eines Sterilisierungsvorganges ablaufen, der vorrichtungstechnisch dadurch erzielt werden kann, daß die thermische Einheit eine Erwärmungseinheit ist, mittels der die Masse innerhalb einer vorgegebenen Zeit auf eine vorgegebene Temperatur oberhalb der Raumtemperatur erwärmbar ist.

Ebenso kann die Vorrichtung zur Kristallisation von Zusatzbestandteilen in der Nahrungsmittelmasse verwendet werden, wenn die thermische Einheit anstelle einer Erwärmungseinheit durch eine Abkühlungseinheit ersetzt ist, mittels der die Masse auf eine vorgegebene Temperatur unterhalb der Raumtemperatur abkühlbar ist.

Vorzugsweise ist der Doppelkolbenpumpe im Massefluß ausgangsseitig eine thermische Ausgleichsstrecke nachgeordnet, die im Falle, daß die Masse in der Doppelkolbenpumpe erwärmt wird, als Kühlstrecke ausgebildet ist und in dem Falle, daß die Masse in der Doppelkolbenpumpe abgekühlt wird, als Erwärmungsstrecke ausgebildet ist. Hierdurch wird die Masse nach der thermischen Behandlung gezielt auf Raumtemperatur gebracht, so daß die Gefahr neuer Keimbildungen durch abrupte thermische Beeinflussung ausgeschlossen ist.

Die Erfindung wird im folgenden anhand einer Zeichnung näher erläutert:
In dem dargestellten Fließdiagramm durchläuft die aufzubereitende pastöse oder flüssige Nahrungsmittelmasse die Strecke von den Punkten E (Masse Einlauf) bis A (Masse Auslauf).

Nach dem Einlauf durchfließt die Masse zunächst die Magnetventile 1 und 2, bevor sie in den ersten Kolbenraum 3a einer Tandem-Doppelkolbenpumpe eintritt. Über ein weiteres Magnetventil 5, welches zusätzlich ein Schermittel beinhaltet, kann die Masse vom Kolbenraum 3a in den anderen Kolbenraum 3b der Doppelkolbenpumpe gelangen. Über das Magnetventil 6 ist der weitere Kolbenraum 3b mit einer Kühlstrecke 7 verbunden, an deren Ende die Masse im Bereich A über ein weiteres Magnetventil 8 austritt. Der Temperaturerlauf in der Kühlstrecke 7 wird über ein Thermometer 10 überwacht.

Die Doppelkolbenpumpe weist neben den Kolbenräumen 3a,3b Kolbenzylinderanordnungen 4a, 4b auf, die über eine Steuereinheit 4c im Tandembetrieb wechselweise beaufschlagt werden. Darüber hinaus ist eine Erwärmungseinheit 9 vorgesehen, mittels der der Bereich der Kolbenräume 3a,3b so erwärmbar ist, daß die in den jeweiligen Kolbenräumen 3a,3b befindliche Masse ihre Temperatur erhöht. Die Steuerung 4c der Doppelkolbenpumpe übernimmt sowohl die Steuerung der Taktfrequenz der Kolbenzylinderanordnung 4a,4b als auch die Temperatursteuerung. Darüber kann auch die Kolbengeschwindigkeit gesteuert werden.

Mit Bezugzeichen nicht weiter bezeichnet sind Hilfsleitungen für Wasser, Luft und Reinigungsmittel, die die Peripherie des Prozesses darstellen.

Die Funktion der erfindungsgemäßen Vorrichtung wird im folgenden näher erläutert:
Zu Beginn des Prozesses wird der Kolbenraum 3a über den Einlaß E bei geöffneten Ventilen 1,2 und geschlossenem Ventil 5 mit der aufzubereitenden Nahrungsmittelmasse beaufschlagt, bis der Kolbenraum 3a vollständig gefüllt ist.

Anschließend werden die Ventile 1,2 geschlossen und das mit einem Schermittel versehene Ventil 5 geöffnet. Im nächsten Kolbenzyklus wird hierbei die Masse aus dem Kolbenraum 3a über das Schermittel 5 in den Kolbenraum 3b gepumpt, da das Ventil 6 zu diesem Zeitpunkt geschlossen ist. Bereits beim ersten Kolbenwechsel wird die Masse bei ihrem Eintritt in den ersten Kolbenraum 3a durch die thermische Erwärmungseinheit 9 gegenüber der Raumtemperatur erwärmt. Anschließend erfolgt bei unveränderter Ventilstellung ein Rückpumpen in den ersten Kolbenraum 3a usw.. Im Verlaufe des Umpumpvorganges wird die Masse somit innerhalb einer durch die Taktzeit der Doppelkolbenpumpe bestimmten Zeit auf eine vorgegebene Temperatur erwärmt. Da sie bei jedem Taktwechsel das Schermittel durchströmt, wird sie neben der thermischen Beaufschlagung auch mechanisch behandelt. Hierdurch brechen die einen Kontaminationkeim umgebenden Hüllen auf, so daß der Keim thermisch zerstört wird.

Nachdem die Masse die gewünschte Endtemperatur erreicht hat, wird das Ventil 5 geschlossen und die Masse gelangt über das jetzt geöffnete Ventil 6 in den Eingangsbereich der Kühlstrecke 7, an deren Ende sie wiederum Raumtemperatur erreicht und dort bei geöffnetem Ventil 8 ausgegeben werden kann.

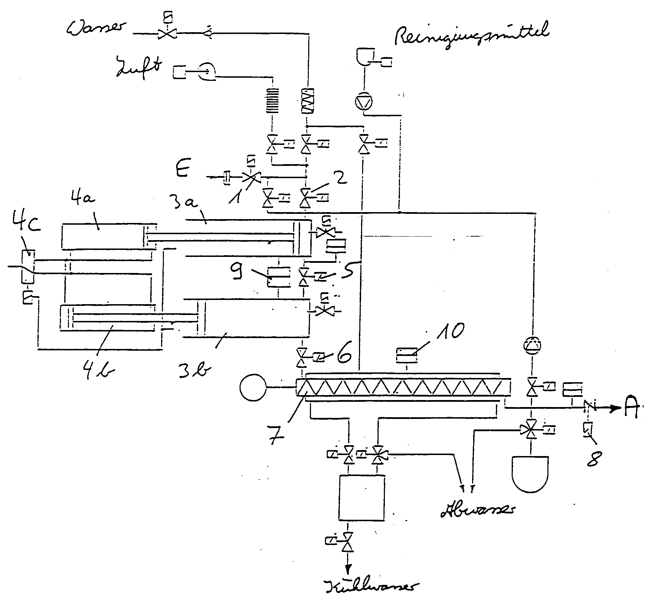

**Patentansprüche**

1. Vorrichtung zur thermischen Aufbereitung von pastösen oder flüssigen Nahrungsmittelmassen, insbesondere Schokoladenmassen, mit folgenden Merkmalen:
   - einer im Tandembetrieb arbeitenden Doppelkolbenpumpe (3a,3b,4a,4b),
   - einem Einlaß (E), durch den die Masse in den einen Kolbenraum (3a) der Doppelkolbenpumpe einleitbar ist,
   - einem Auslaß (A, 6), aus dem die Masse aus dem anderen Kolbenraum (3b) ausgebbar ist,
   - im Weg zwischen den beiden Kolbenräumen (3a,3b) angeordneten Schermitteln (5) zur Ausübung von hohen Scherkräften auf die die Schermittel (5) durchströmende Masse

und

   - einer den Kolbenräumen (3a,3b) der Doppelkolbenpumpe zugeordneten Einheit (9) zur thermischen Beaufschlagung der in den Kolbenräumen (3a,3b) befindlichen Masse.

2. Vorrichtung nach Anspruch 1,
   **dadurch gekennzeichnet,** daß die thermische Einheit (9) eine Erwärmungseinheit ist, mittels der die in den Kolbenräumen (3a,3b) befindlichen Masse auf eine vorgegebene Temperatur innerhalb einer vorgegebenen Zeit erwärmbar ist.

3. Vorrichtung nach Anspruch 1,
   **dadurch gekennzeichnet,** daß die thermische Einheit (9) eine Abkühlungseinheit ist, mittels der die in den Kolbenräumen (3a,3b) befindliche Masse innerhalb einer vorgegebenen Zeit auf eine vorgegebene Temperatur abkühlbar ist.

4. Vorrichtung nach Anspruch 1,
   **dadurch gekennzeichnet,** daß dem Auslaß (6) eine thermische Ausgleichsstrecke (7) nachgeordnet ist.

5. Vorrichtung nach Anspruch 1, 2 oder 4,
   **dadurch gekennzeichnet,** daß die thermische Ausgleichsstrecke eine Kühlstrecke ist.

6. Vorrichtung nach einem der Ansprüche 1, 3 oder 4,
   **dadurch gekennzeichnet,** daß die thermische Ausgleichsstrecke eine Aufwärmstrecke ist.

7. Verfahren zum Sterilisieren von pastösen oder flüssigen Nahrungsmittelmassen, insbesondere Schokoladenmassen unter Verwendung einer Vorrichtung nach Anspruch 1, 2 oder 5, gekennzeichnet durch folgende Merkmale:
   - nach dem Einpumpen der Masse in den ersten Kolbenraum (3a) wird die Masse im Tandembetrieb der Doppelkolbenpumpe ständig von einem Kolbenraum (3a) in den anderen Kolbenraum (3b) hin und her gepumpt, wobei die Masse nach Vorgabe eines Temperaturzeitprofils erwärmt

und

   - während des Umpumpvorganges von einem Kolbenraum (3a) zum anderen (3b) durchströmt die Masse ein Schermittel (5), wobei aufgrund der hohen Scherkräfte die Sterilisation unterstützt wird.

8. Verfahren zur Kristallisation von pastösen oder flüssigen Nahrungsmitteln, insbesondere Schokoladenmassen, unter Verwendung einer Vorrichtung nach einem der Ansprüche 1, 3 oder 6, gekennzeichnet durch folgende Merkmale:
   - nach dem Einpumpen der Masse in den ersten Kolbenraum (3a) wird die Masse im Tandembetrieb der Doppelkolbenpumpe standig von einem Kolbenraum (3a) in den anderen (3b) hin und her gepumpt, wobei die Masse dabei nach Vorgabe eines Temperaturzeitprofiles abgekühlt wird

      und
   - während des Umpumpvorganges durchströmt die Masse ein Schermittel (5).

9. Verfahren nach einem der Ansprüche 7 oder 8, **dadurch gekennzeichnet,** daß die Masse nach dem Auslauf aus der Doppelkolbenpumpe auf Verarbeitungstemperatur gebracht wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-2 130 134 (A. SCHMITT) --- | | A23G1/02 A23G1/18 |
| A | DE-A-2 924 841 (KREUTER & CO.) --- | | A23G1/04 A23L3/015 |
| A | FR-A-1 436 282 (F. SCHULTZ) --- | | |
| A | EP-A-0 041 641 (ELL ARNO) --- | | |
| A | GB-A-2 066 642 (K. BERKES ET AL.) --- | | |
| A | WO-A-8 505 012 (R. RAPP) ----- | | |

**RECHERCHIERTE SACHGEBIETE (Int. Cl.5)**

A23G
A23L

Der vorliegende Recherchenbericht wurde für alle Patentansprüche erstellt

| Recherchenort | Abschlußdatum der Recherche | Prüfer |
|---|---|---|
| DEN HAAG | 13 AUGUST 1992 | GUYON R.H. |